# EUROPEAN PATENT SPECIFICATION

(11) **EP 4 589 783 B1**
(45) Date of publication and mention of the grant of the patent: **28.10.2026**
(21) Application number: 23864776.2
(22) Date of filing: 15.09.2023
(51) Int. Cl.: H01R 13/03, H01R 4/62, H01R 4/02, C22C 21/12, C22C 9/01, B32B 15/01, H01R 11/12, H01R 4/04, H01R 11/05, H01R 43/16

(54) **NEW COPPER-ALUMINUM COMPOSITE TERMINAL**
NEUE KUPFER-ALUMINIUM-VERBUNDKLEMME
NOUVELLE BORNE COMPOSITE CUIVRE-ALUMINIUM

(30) Priority: 16.09.2022 CN 202211129791
(43) Date of publication of application: 23.07.2025
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2023/118980
(87) International publication number: WO 2024/056046

(56) References cited:
- EP-B1- 2 673 843
- CN-A- 106 063 039
- CN-A- 106 972 285
- CN-A- 110 098 499
- CN-A- 113 708 172
- CN-A- 114 006 199
- CN-A- 114 784 525
- CN-A- 115 579 653
- CN-U- 202 513 302
- CN-U- 205 429 187
- CN-U- 216 085 394
- CN-Y- 201 146 256
- JP-A- 2016 136 494
- JP-A- 2019 096 532

## Description

### RELATED APPLICATION

The present disclosure which claims priority of the Chinese Patent Application No. 202211129791.9, an invention title of "novel copper-aluminum composite terminal", and filed on September 16, 2022.

### TECHNICAL FIELD

The present disclosure relates to the technical field of electrical connection device, and particularly to a novel copper-aluminum composite terminal.

### BACKGROUND

With the increasing use of electrical connection terminal, elemental copper terminal or copper-aluminum terminal has become commonly used wiring terminal. In the traditional field of electrical connection technologies, both the wiring terminal and the cable conductor are made of copper or copper alloy. On one hand, the price of copper continues to rise due to The limited copper reserves have led to a continuous rise in the price of copper, which ultimately leads to the increase in the cost of cables. On the other hand, the large mass of copper itself also limits the realization of lightweight cables.

For this reason, a conductive material having a relatively large storage capacity and a relatively light weight, such as aluminum or aluminum alloy, has been used as a cable conductor material to realize the lightweight of cables. However, there is a significant electrode potential difference between copper and aluminum, when a copper terminal is directly connected to a conductor of an aluminum cable, galvanic corrosion may occur between copper and aluminum under the action of air and water, and corrosion of the aluminum cable conductor can lead to an increase in contact resistance at the copper-aluminum connection area and then serious consequences may occur in the electrical connection, such as a functional failure of an electrical connector, fire and so on.

In order to improve the stability of electrical conductivity between wires, the wiring terminals used are all made of aluminum alloy, which is similar to the material of the wires. Although this can meet the needs of use to a certain extent, aluminum alloy exhibits relatively poor structural strength, the high temperature resistance and the corrosion resistance are relatively poor, and the overload resistance is relatively insufficient. In addition, there is significant variability in the structures of the wiring terminals, causing great differences in the current distribution in the wiring terminals, which leads to relatively poor electrical conductivity, stability and reliability of the aluminum alloy terminals currently used, thereby seriously affecting the reliability and the stability of the electric line connection. Therefore, in view of the current situation, there is an urgent need to develop a novel copper-aluminum composite terminal to meet the needs of practical use. Conventional terminals are known from the prior art, for example from CN106972285A, EP2673843B1, CN205429187U, CN201146256Y, and CN110098499A.

### SUMMARY

The present disclosure provides a novel copper-aluminum composite terminal, which electrically connects an aluminum cable and an electric device and facilitate the flow of current, in which the copper-aluminum composite terminal includes a connecting part and a functional part which are connected to each other, the functional part is made of an aluminum-clad copper composite material which includes an inner copper layer and an outer aluminum layer encapsulating the inner copper layer, the connecting part is connected to a conductive portion of the aluminum cable, and at least part of the copper layer of the functional part is connected to the electric device.

Optionally, at least part of a surface of the functional part is provided with a plating layer, a thickness of which is 0.05 µm to 1000 µm.

Optionally, the material of the plating layer includes materials selected from the group consisting of zinc, nickel, copper, tin, gold, silver, cadmium, manganese, zirconium, cobalt, titanium, chromium, tin-lead alloy, silver-antimony alloy, palladium, palladium-nickel alloy, graphite silver, graphene silver and silver-gold-zirconium alloy.

Optionally, the plating layer includes a bottom layer with a thickness of 0.01 µm to 100 µm, and a surface layer with a thickness of 0.03 µm to 900 µm.

Optionally, a thickness of the aluminum layer in the aluminum-clad copper composite material accounts for 0.1% to 100% of a thickness of the copper layer.

Optionally, the connecting part and the functional part are integrally formed from the aluminum-clad copper composite material.

According to the invention, the connecting part and the functional part are separated, the connecting part is made of aluminum, and the aluminum layer of the functional part is connected to the connecting part.

Optionally, the connecting part and the functional part are butt-jointed, with a welding seam disposed therebetween.

According to the invention, at least part of the connecting part is superposed and welded with at least part of the functional part.

According to the invention, an overlapping area of the functional part and the connecting part accounts for 5% to 100% of an overlapping area on the connecting part's interface with the functional part.

Optionally, one of the connecting part and the functional part is provided with a recess, and the other is provided with a protrusion matched with the recess for mounting.

Optionally, the recess and the protrusion are connected by means of welding or conductive adhesive bonding.

Optionally, the functional part is shaped as a flat plate, and the flat plate is provided with a through hole or a threaded hole.

Optionally, the functional part is shaped as a barrel, the copper layer is at least located inside the cylinder, and the barrel is provided with at least one slot in a longitudinal direction.

Optionally, the connecting part is a flat plate structure or a cylindrical structure or a U-shaped open structure or a V-shaped open structure.

Optionally, the connecting part and the conductive portion of the aluminum cable are connected by means of crimping or welding or bonding or riveting.

Optionally, a copper-aluminum transition layer is disposed between the copper layer and the aluminum layer.

Optionally, the copper-aluminum transition layer includes at least 8.5 wt% of a copper-aluminum solid solution.

Optionally, the copper-aluminum transition layer includes a copper-aluminum compound not more than 45.5wt%.

The present disclosure achieves the following technical effects:

The copper-aluminum composite terminal includes a connecting part and a functional part. The connecting part is connected to an aluminum cable, and the functional part is connected to an electric device. The commonly used terminal at present is integrally formed of a copper material, and is connected to the aluminum cable by direct mechanical crimping or welding, so that the problem of galvanic corrosion is easy to occur. According to the design of this structure, the periphery or the entirety of the connecting part is made of aluminum or aluminum alloy, which can effectively reduce the manufacturing cost and the weight of the copper terminal that is made integrally, and avoid the problem of galvanic corrosion between the connecting part and the aluminum cable at the same time, thereby reducing the difficulty in the welding of dissimilar shaped materials, making the copper-aluminum composite terminal less prone to breakage during use, improving the safety performance and significantly increasing the service life.

When the functional part is connected to the electric device, the electric device is generally made of copper, the copper layer in the functional part ensures that when the electrical device is connected to the functional part, the copper layer can achieve sufficient electrical connection with the electric device, thereby reducing the cost of the product while satisfying the performance of the copper terminal.

The snap-fit connection structure is disposed between the connecting part and the functional part, which increases the contact area between the connecting part and the functional part, reduces the resistance and improves the conduction effect. On the other hand, the snap-fit connection structure also increases the bonding force between the connecting part and the functional part, so that the strength of the copper-aluminum composite terminal is higher, thereby improving the electrical and mechanical properties of the copper-aluminum composite terminal.

Other features and advantages of the present disclosure may become clear from the following detailed description of the exemplary embodiments of the present disclosure with reference to the drawings.

### BRIEF DESCRIPTION OF THE DRAWINGS

The drawings, which are incorporated in and constitute a part of the specification, illustrate the embodiments of the present disclosure and together with the description, serve to explain the principles of the present disclosure.
FIG. 1 illustrates a schematic structural view of a copper-aluminum composite terminal according to an example of the present disclosure;
FIG. 2 illustrates a front view of the copper-aluminum composite terminal of the present disclosure in FIG. 1;
FIG. 3 illustrates a cross-sectional view taken along line A-A in FIG. 2;
FIG. 4 illustrates a cross-sectional view of another example taken along line A-A in FIG. 2;
FIG. 5 illustrates a schematic structural view of a copper-aluminum composite terminal according to an embodiment of the present disclosure;
FIG. 6 illustrates a front view of a copper-aluminum composite terminal of the present disclosure in FIG. 4;
FIG. 7 illustrates a cross-sectional view taken along line B-B in FIG. 6;
FIG. 8 illustrates a schematic structural view of a connecting part of a copper-aluminum composite terminal in FIG. 6;
FIG. 9 illustrates a schematic structural view of a functional part of a copper-aluminum composite terminal in FIG. 6; and
FIG. 10 illustrates a schematic structural view of a copper-aluminum composite terminal according to another example of the present disclosure.

### Reference numerals:

1: connecting part; 2: functional part; 3: recess; 4: protrusion; 5: through hole; 6: slot; 21: copper layer; 22: aluminum layer.

### DETAILED DESCRIPTION OF THE EMBODIMENTS

Various exemplary embodiments of the present disclosure are described in detail with reference to the drawings. It should be noted that the relative arrangements, numerical expressions and numerical values of components and steps set forth in these embodiments do not limit the scope of the present disclosure unless otherwise specified.

The following description of at least one exemplary embodiment is merely illustrative in nature and is in no way intended to limit the present disclosure and applications or uses thereof.

Techniques, methods and devices known to those of ordinary skill in the relevant fields may not be discussed in detail, but they should be regarded as parts of the specification under appropriate circumstances.

In all the examples illustrated and discussed here, any specific value should be construed as merely illustrative and not as a limitation. Therefore, other examples of the exemplary embodiments may have different values.

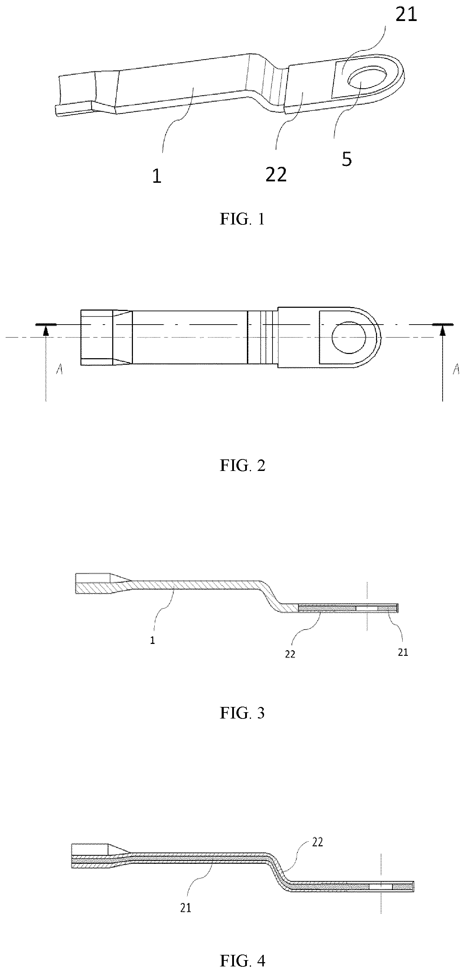

A novel copper-aluminum composite terminal, as illustrated in FIGS. 1 to 10, electrically connects an aluminum cable and an electric device and serves to conduct current. The copper-aluminum composite terminal includes a connecting part 1 and a functional part 2 which are connected to each other, the functional part 2 is made of an aluminum-clad copper composite material which includes an inner copper layer 21 and an outer aluminum layer 22 encapsulating the inner copper layer 21, the connecting part 1 is connected to a conductive portion of the aluminum cable, and at least part of the copper layer 21 of the functional part 2 is connected to the electric device.

In an embodiment, as illustrated in FIG. 3, the functional part 2 is composed of an inner copper layer 21 and an outer aluminum layer 22 encapsulating the inner copper layer 21. The connecting part 1 is made of aluminum or aluminum alloy, and the connecting part 1 may be connected to the functional part 2 by means of welding or conductive adhesive bonding. The connecting part 1 is connected to the aluminum cable, the copper layer 21 is exposed after the aluminum layer 22 is partially removed from the functional part 2, and the copper layer 21 of the functional part 2 is connected to the electric device.

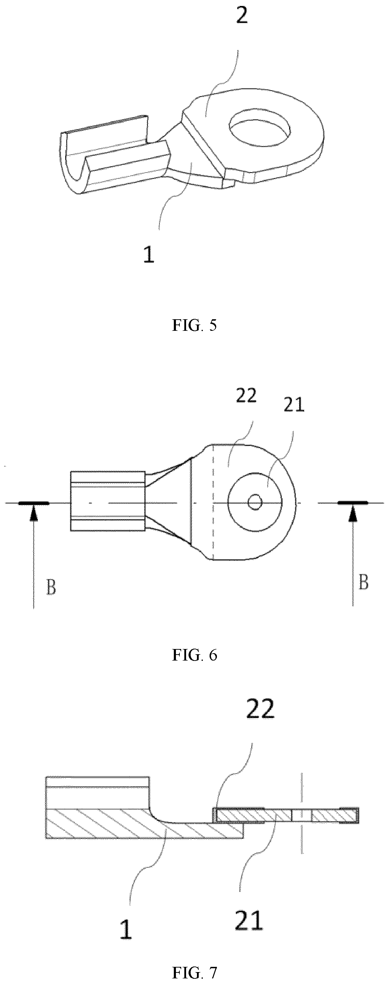

In another embodiment, as illustrated in FIG. 7, the functional part 2 is composed of an inner copper layer 21 and an aluminum layer 22 encapsulating the periphery of at least part of the copper layer 21. The connecting part 1 is made of aluminum or aluminum alloy, and the connecting part 1 may be connected to the functional part 2 by means of snap-fit connection, welding or conductive adhesive bonding. The connecting part 1 is connected to the aluminum cable, and the functional part 2 is connected to the electric device through the copper layer 21.

In another embodiment, as illustrated in FIG. 4, the functional part 2 is composed of an inner copper layer 21 and an aluminum layer 22 encapsulating the copper layer 21, and the connecting part 1 may also be composed of an inner copper layer 21 and an aluminum layer 22 encapsulating the copper layer 21. The connecting part 1 and the functional part 2 are integrally formed, i.e., the copper layer 21 extends through the terminal along a length direction thereof, and the copper layer 21 is cladded by the aluminum layer 22. The connecting part 1 is connected to the aluminum cable, the copper layer 21 is exposed after the aluminum layer 22 is partially removed from the functional part 2, and the copper layer 21 of the functional part 2 is connected to the electric device.

The copper-aluminum composite terminal includes a connecting part 1 and a functional part 2. The connecting part 1 is connected to an aluminum cable, and the functional part 2 is connected to an electric device. The commonly used terminal at present is integrally formed of a copper material, and is connected to the aluminum cable by direct mechanical crimping or welding, so that the problem of galvanic corrosion is easy to occur. According to the design of this structure, the periphery or the entirety of the connecting part 1 is made of aluminum or aluminum alloy, which can effectively reduce the manufacturing cost and the weight, at the same time avoid the problem of galvanic corrosion between the connecting part 1 and the aluminum cable, thereby reducing the difficulty in the welding of dissimilar materials, making the copper-aluminum composite terminal less prone to breakage during use, improving safety performance and significantly increasing the service life.

When the functional part 2 is connected to the electric device that is generally made of copper, the copper layer 21 in the functional part 2 ensures that when the electrical device is connected to the functional part 2, the copper layer 21 can achieve sufficient electrical connection with the electric device, thereby satisfying the performance of the copper terminal, and reducing the cost pressure of the product at the same time.

In an embodiment, at least part of a surface of the functional part 2 is provided with a plating layer, a thickness of the plating layer is 0.05 µm to 1000 µm.

In order to verify the influence of different thicknesses on a voltage drop, the inventor uses the copper-aluminum composite terminals of the same material and structure, provides plating layers with different thickness on the surface of the functional part 2, and then tests the voltage drop across the two ends of the copper-aluminum composite terminal. In this embodiment, the voltage drop greater than 4 mV is unqualified, and the test results are shown in Table 1.

**Table 1: Influence of different thicknesses of the plating layer on the voltage drop (mV)**

| Thickness of the plating layer (µm) | | | | | | | | | | | | | | | |
|---|---|---|---|---|---|---|---|---|---|---|---|---|---|---|---|
| No. | 0.005 | 0.05 | 0.1 | 0.5 | 1 | 5 | 10 | 50 | 100 | 300 | 500 | 700 | 800 | 1000 | 4000 |
| | Voltage drop after plugging (mV) | | | | | | | | | | | | | | |
| 1 | 4.2 | 3.5 | 3.3 | 3.2 | 3.3 | 3.4 | 3.6 | 3.5 | 3.6 | 3.6 | 3.7 | 3.8 | 3.9 | 3.9 | 4.1 |
| 2 | 4.0 | 3.4 | 3.3 | 3.1 | 3.2 | 3.5 | 3.5 | 3.6 | 3.6 | 3.7 | 3.8 | 3.8 | 3.8 | 3.8 | 4.1 |
| 3 | 4.1 | 3.4 | 3.4 | 3.1 | 3.1 | 3.4 | 3.6 | 3.6 | 3.7 | 3.7 | 3.8 | 3.8 | 3.8 | 3.8 | 4.0 |
| 4 | 4.1 | 3.5 | 3.2 | 3.2 | 3.2 | 3.4 | 3.5 | 3.7 | 3.5 | 3.7 | 3.8 | 3.8 | 3.8 | 3.9 | 4.1 |
| 5 | 4.2 | 3.4 | 3.3 | 3.1 | 3.2 | 3.5 | 3.5 | 3.6 | 3.7 | 3.8 | 3.8 | 3.8 | 3.8 | 3.8 | 4.2 |
| 6 | 4.0 | 3.4 | 3.2 | 3.1 | 3.3 | 3.4 | 3.5 | 3.6 | 3.6 | 3.7 | 3.7 | 3.7 | 3.7 | 3.9 | 4.2 |
| 7 | 4.2 | 3.6 | 3.3 | 3.1 | 3.2 | 3.6 | 3.4 | 3.6 | 3.6 | 3.7 | 3.8 | 3.8 | 3.8 | 3.8 | 4.0 |
| 8 | 4.1 | 3.4 | 3.4 | 3.1 | 3.3 | 3.4 | 3.5 | 3.7 | 3.7 | 3.8 | 3.7 | 3.7 | 3.9 | 3.9 | 4.1 |
| 9 | 4.2 | 3.4 | 3.2 | 3.2 | 3.3 | 3.3 | 3.5 | 3.6 | 3.6 | 3.7 | 3.7 | 3.8 | 3.8 | 3.9 | 4.2 |
| 10 | 4.2 | 3.5 | 3.3 | 3.1 | 3.3 | 3.4 | 3.6 | 3.6 | 3.8 | 3.7 | 3.7 | 3.7 | 3.9 | 3.9 | 4.1 |
| Average value | 4.13 | 3.45 | 3.29 | 3.13 | 3.24 | 3.42 | 3.52 | 3.62 | 3.64 | 3.71 | 3.75 | 3.77 | 3.82 | 3.86 | 4.11 |

As can be seen from the data in Table 1, when the thickness of the plating layer is greater than 1000 µm and less than 0.05 µm, the voltage drop across the copper-aluminum composite terminal is greater than 4 mV, and when the thickness of the plating layer is less than 0.05 µm, the plating layer is too thin to meet the required value. Thus, the inventor selects the thickness of the plating layer to be 0.05 µm to 1000 µ m.

In an embodiment, the material of the plating layer includes one or more materials selected from the group consisting of zinc, nickel, copper, tin, gold, silver, cadmium, manganese, zirconium, cobalt, titanium, chromium, tin-lead alloy, silver-antimony alloy, palladium, palladium-nickel alloy, graphite silver, graphene silver and silver-gold-zirconium alloy.

The inventor uses the copper-aluminum composite terminals with same specifications and materials but with different plating layer materials on the functional part 2,to carry out a series of corrosion resistance time tests, and the test results are shown in Table 2.

The corrosion resistance time test in Table 2 is to put a sample into a salt spray test chamber, spray salt mist on all positions on the surface of the functional part 2, take out and clean the sample to observe the surface corrosion at an interval of 20 hours, which is a cycle, stop the test when a corrosion area on the surface of the functional part 2 of the sample is greater than 10% of a total area of the functional part 2, and record the number of cycles at that time. In this embodiment, the number of cycles less than 80 is considered unqualified.

**Table 2: Influence of different plating layers on the corrosion resistance of the surface of the functional part 2**

| Materials of different plating layers | | | | | | | | | |
|---|---|---|---|---|---|---|---|---|---|
| Nicke l | Cadmiu m | Manganes e | Zirconiu m | Cobalt | Tin | Titanium | Zinc | Chrom e | Coppe r |
| Number of cycles of the corrosion resistance test | | | | | | | | | |
| 89 | 126 | 122 | 130 | 126 | 84 | 125 | 82 | 108 | 126 |
| | | | | | | | | | |

| Materials of different plating layers | | | | | | | | | |
|---|---|---|---|---|---|---|---|---|---|
| Gold | Silver | Silver-antimony alloy | Graphite silver | Graphen e silver | Silver-gold-zirconiu m alloy | Palladiu m | Palladium -nickel alloy | Tin-lead alloy | Hard silver |
| Number of cycles of the corrosion resistance test | | | | | | | | | |
| 135 | 128 | 125 | 133 | 126 | 134 | 117 | 125 | 119 | 135 |

As can be seen from Table 2, when the materials of the plating layers include the commonly used metals such as tin, nickel and zinc, the test results are not as good as the plating layers using other metals, and the test results of the plating layers using other metals far exceed the standard values and achieve relatively stable properties. Therefore, the inventor selects that the material of the plating layer includes one or more materials selected from the group consisting of nickel, cadmium, manganese, zirconium, cobalt, tin, titanium, chromium, copper, gold, silver, zinc, tin-lead alloy, silver-antimony alloy, palladium, palladium-nickel alloy, graphite silver, graphene silver, hard silver and silver-gold-zirconium alloy. Exemplarily, the material of the plating layer includes (or consists of) one or more materials selected from the group consisting of cadmium, manganese, zirconium, cobalt, titanium, chromium, copper, gold, silver, tin-lead alloy, silver-antimony alloy, palladium, palladium-nickel alloy, graphite silver, graphene silver, hard silver and silver-gold-zirconium alloy.

In an embodiment, the plating layer includes a bottom layer with a thickness of 0.01 µm to 100 µm, and a surface layer with a thickness of 0.03 µm to 900 µm.

In some embodiments, multi-layer plating is adopted to form the plating layers. After the processing of the copper-aluminum composite terminal, there are still many cracks and pores under the microscopic interface of the terminal surface, and the cracks and pores are the biggest reason for the wear and the corrosion of the terminal in use. Therefore, it is necessary to plate a bottom layer on the surface of the functional part 2 to fill the cracks and pores on the surface, so that the surface of the functional part 2 is flat and free of pores, and then plate a surface layer, so that the bonding is firmer and the surface is smoother. When the surface of the plating layer is free of cracks and pores, the wear resistance property, the corrosion resistance property and the electrical property of the terminal are better, and the service life of the terminal is greatly prolonged.

The material of the bottom layer includes one or more materials selected from the group consisting of gold, silver, nickel, tin, tin-lead alloy and zinc; and the material of the surface layer includes one or more materials selected from the group consisting of gold, silver, silver-antimony alloy, palladium, palladium-nickel alloy, graphite silver, graphene silver and silver-gold-zirconium alloy.

In some embodiments, a thickness of the bottom layer is 0.01 µm to 100 µm.

In some embodiments, a thickness of the surface layer is 0.03 µm to 900 µm.

In order to verify the influence of the change in the thickness of the bottom layer of the plating layer on the overall performance of the terminal, the inventor uses terminal samples with the same specifications and materials at the position of the functional parts 2 of the samples of the copper-aluminum composite terminal, and nickel-plated bottom layers with different thicknesses and the silver-plated surface layers with the same thickness are adopted within the functional parts 2 of the samples. The inventor prepares the terminal samples in the terminal structure illustrated in FIG. 3, and carries out a series of temperature rise and corrosion resistance time tests with the copper-aluminum composite terminals of the same specification. The test results are shown in Table 3 below.

The temperature rise test in Table 3 is to conduct the same current to the samples of the copper-aluminum composite terminal, detect the temperatures at the same position of the terminals before the current is conducted and after the temperatures are stabilized in a closed environment, and take an absolute value of a difference between the above temperatures. In this embodiment, a temperature rise greater than 50 K is considered unqualified.

The corrosion resistance time test in Table 3 is to put the sample of the copper-aluminum composite terminal into a salt spray test chamber, spray salt mist on all positions on the functional part 2 of the terminal, take out and clean the sample to observe the surface corrosion at an interval of 20 hours, which is a cycle, stop the test when a surface corrosion area of the functional part 2 of the sample is greater than 10% of a total surface area of the functional part 2, and record the number of cycles at that time. In this embodiment, the number of cycles less than 80 is considered unqualified.

**Table 3: Influence of different thicknesses of the bottom layer of the plating layer on the temperature rise and the corrosion resistance of the terminal**

| Different thicknesses of the plating layer (µm) | | | | | | | | | | | | | | | |
|---|---|---|---|---|---|---|---|---|---|---|---|---|---|---|---|
| 0.00 1 | 0.00 5 | 0.01 | 0.1 | 1 | 10 | 20 | 30 | 40 | 50 | 60 | 70 | 80 | 90 | 100 | 110 |

| Temperature rise of the terminal (K) | | | | | | | | | | | | | | | |
|---|---|---|---|---|---|---|---|---|---|---|---|---|---|---|---|
| 10.7 | 12.5 | 14.9 | 16.6 | 18.2 | 21.7 | 24.5 | 26.7 | 28.6 | 31.3 | 35.9 | 40.3 | 43.5 | 47.9 | 48.1 | 67.4 |

| Number of cycles of the corrosion resistance test | | | | | | | | | | | | | | | |
|---|---|---|---|---|---|---|---|---|---|---|---|---|---|---|---|
| 67 | 79 | 82 | 96 | 105 | 109 | 115 | 117 | 120 | 124 | 128 | 128 | 130 | 130 | 129 | 127 |

As can be seen from Table 3, when the thickness of the nickel-plated bottom layer is less than 0.01 µm, although the temperature rise of the terminal is qualified, the number of cycles of the corrosion resistance test of the functional part of the terminal is less than 80 because the nickel-plated bottom layer is too thin, which does not meet the performance requirements of the terminal. When the thickness of the nickel-plated bottom layer is greater than 100 µm, the heat generated by the terminal cannot be radiated because the nickel-plated bottom layer is thick, such that the temperature rise of the terminal is unqualified, and the thick plating layer is easy to detach from the surface of the terminal, resulting in a decrease in the number of cycles of the corrosion resistance test. Therefore, the inventor selects the thickness of the bottom layer of the plating layer as 0.01 µm to 100 µm. Exemplarily, the inventor finds that when the thickness of the bottom layer of the plating layer is 0.1 µm to 90 µm, the comprehensive effect of the temperature rise and the corrosion resistance of the terminal is better.

Similarly, in order to verify the influence of the change in the thickness of the surface layer of the plating layer on the overall performance of the terminal, at the position of the functional part 2 of the sample of the copper-aluminum composite terminal, the inventor uses the same specifications and materials, adopts terminal samples with the nickel-plated bottom layers having the same thickness and the silver-plated surface layers having different thicknesses, and carries out a series of temperature rise and corrosion resistance time tests. The test results are shown in Table 4 below.

The test method is the same as that described above.

**Table 4: Influence of different thicknesses of the surface layer of the plating layer on the temperature rise and the corrosion resistance**

| Different thicknesses of the plating layer (µm) | | | | | | | | | | | | | | | | |
|---|---|---|---|---|---|---|---|---|---|---|---|---|---|---|---|---|
| 0.1 | 0.03 | 1 | 1.5 | 10 | 50 | 100 | 200 | 250 | 300 | 400 | 500 | 600 | 700 | 800 | 900 | 1000 |

| Temperature rise of the terminal (K) | | | | | | | | | | | | | | | | |
|---|---|---|---|---|---|---|---|---|---|---|---|---|---|---|---|---|
| 11.4 | 13.6 | 15.3 | 17.4 | 21.6 | 23.9 | 25.3 | 28.6 | 31.6 | 35.4 | 38.9 | 42.1 | 45.2 | 48.4 | 49.0 | 49.5 | 69.6 |

| Number of cycles of the corrosion resistance test | | | | | | | | | | | | | | | | |
|---|---|---|---|---|---|---|---|---|---|---|---|---|---|---|---|---|
| 75 | 81 | 91 | 93 | 95 | 95 | 98 | 102 | 104 | 109 | 113 | 117 | 119 | 122 | 125 | 124 | 121 |

As can be seen from Table 4, when the thickness of the silver-plated surface layer is less than 0.03 µm, although the temperature rise of the terminal is qualified, the number of cycles of the corrosion resistance test of the terminal is less than 80 because the silver-plated surface layer is too thin, which does not meet the performance requirements of the terminal. As a result, the overall performance and the service life of the connector are greatly affected, and in severe cases, a significant reduction of the service life of the product or even a failure and combustion accident may be caused. When the thickness of the silver-plated surface layer is greater than 900 µm, the heat generated by the terminal cannot be radiated because the silver-plated surface layer is thick, such that the temperature rise of the terminal is unqualified, and the thick plating layer is easy to detach from the surface of the terminal, resulting in a decrease in the number of cycles of the corrosion resistance test. Moreover, since the performance is not improved and the metal of the surface layer of the plating layer is expensive, the thick plating layer has no use value. Therefore, the inventor selects the thickness of the silver-plated surface layer as 0.03 µm to 900 µm.

In an embodiment, a thickness of the aluminum layer 22 in the aluminum-clad copper composite material accounts for 0.1% to 100% of a thickness of the copper layer 21.

Specifically, taking the functional part 2 as an example, in order to verify the influence of a ratio of the thickness of the copper layer 21 to the thickness of the aluminum layer 22 on a voltage drop and a tensile strength, the inventor prepares the terminal samples in the structure of the copper-aluminum composite terminal illustrated in FIG. 3, and selects 17 groups of samples of the copper-aluminum composite terminals of the same cross-sectional area and different thickness ratios, to test the voltage drop and the tensile strength of the copper-aluminum composite terminals. The test results are shown in Table 5.

In this embodiment, when the voltage drop across two ends of the copper-aluminum composite terminal is greater than 4 mV, it is considered unqualified.

The test method of the tensile strength of the copper-aluminum composite terminal: both ends of the sample of the copper-aluminum composite terminal are fixed on tensile fixtures of a universal tensile tester, and the sample is stretched at a speed of 50 mm/min. A tensile value is recorded when the sample is finally broken. In this embodiment, the tensile force value greater than 1600 N is a qualified value.

**Table 5: The influence of a ratio of the thickness of the copper layer 21 to the thickness of the aluminum layer 22 on a voltage drop (mV) and a tensile strength (N)**

| Ratio of the thickness of the copper layer to the thickness of the aluminum layer | | | | | | | | | | | | | | | | |
|---|---|---|---|---|---|---|---|---|---|---|---|---|---|---|---|---|
| 0.2 | 0.05 | 0.1 | 5 | 8 | 10 | 15 | 20 | 25 | 30 | 40 | 55 | 70 | 85 | 100 | 115 | 130 |

| Voltage drop (mV) | | | | | | | | | | | | | | | | |
|---|---|---|---|---|---|---|---|---|---|---|---|---|---|---|---|---|
| 3.9 | 3.7 | 3.5 | 3.3 | 3.2 | 3.3 | 3.4 | 3.5 | 3.5 | 3.6 | 3.7 | 3.7 | 3.8 | 3.8 | 3.9 | 4.1 | 4.2 |

| Tensile strength (N) | | | | | | | | | | | | | | | | |
|---|---|---|---|---|---|---|---|---|---|---|---|---|---|---|---|---|
| 1520 | 1580 | 1650 | 1720 | 1823 | 1885 | 1931 | 1985 | 2000 | 2016 | 2050 | 2140 | 2180 | 2255 | 2300 | 2390 | 2400 |

As can be seen from the data in the above table, when the ratio of the thickness of the copper layer 21 to the thickness of the aluminum layer 22 is less than 0.1, the tensile strength is less than 1600 N, which is unqualified. When the ratio of the thickness of the copper layer 21 to the thickness of the aluminum layer 22 is greater than 100, the voltage drop is greater than 4 mV, which is unqualified. Therefore, the inventor sets the ratio of the thickness of the copper layer 21 to the thickness of the aluminum layer 22 to be between 0.1% and 100%.

In an embodiment, the connecting part 1 and the functional part 2 are integrally formed from the aluminum-clad copper composite material.

As illustrated in FIGS. 1 to 4, by means of the integrated formation, the labor cost is saved, the processing is convenient, and the performance of the copper-aluminum composite terminal is more stable.

As illustrated in FIGS. 5 to 9, in an embodiment, the connecting part 1 and the functional part 2 are separate structural components, the connecting part 1 is made of aluminum, and the aluminum layer 22 of the functional part 2 is connected to the connecting part 1.

The aluminum layer 22 in the functional part 2 is connected to the connecting part 1, as illustrated in FIGS. 5 to 9, the connecting part 1 is made of aluminum or aluminum alloy, so that the connection between the functional part 2 and the connecting part 1 is firmer, thereby reducing the welding difficulty of dissimilar materials and the galvanic corrosion, making the copper-aluminum composite terminal not easy to be broken during use, and improving the use safety. Since the connecting part 1 and the functional part 2 are separate structural components, the connection therebetween can be adjusted according to the directions of the aluminum cable and the electric device, which is convenient in use. Specifically, based on an extension direction of the terminal, an angle between projections of extension directions of the functional part 2 and the connecting part 1 on a plane may be 90°.

In an embodiment, the connecting part 1 and the functional part 2 are butt-jointed, and a welding seam is disposed between the connecting part 1 and the functional part 2.

Specifically, the welding seam is illustrated in the FIGs. The connecting part 1 and the functional part 2 are connected mainly by means of laser welding or friction stir welding.

The laser welding is an efficient and precise welding method using a laser light beam with a high energy density as a heat source.

The friction stir welding uses the heat generated by a friction between a welding tool rotating at a high speed and a workpiece to partially melt a material to be welded; and when the welding tool moves forward along a welding interface, the plasticized material flows from the front to the back of the welding tool under the effect of a rotating friction force of the welding tool, and forms a dense solid-phase welding seam under the extrusion of the welding tool.

The copper atoms and the aluminum atoms penetrate each other and form a firm metal bond under the effect of pressure, so as to form a welding seam, thereby not only avoiding the galvanic corrosion between copper and aluminum, but also improving the electrical and mechanical properties of the copper-aluminum connection, so that the mechanical and electrical properties of the copper-aluminum composite terminal are significantly improved.

In an embodiment, as illustrated in FIGS. 5 to 7, at least part of the connecting part 1 is superposed and welded with at least part of the functional part 2.

According to the invention, the welded area of the functional part 2 and the connecting part 1 accounts for 5% to 100% of the overlapping area between the functional part 2 and the connecting part 1.

The connecting part 1 and the functional part 2 are connected by welding, and the welding area is set according to actual needs. With time elapses, the overlapping area of the connection between the functional part 2 and the connecting part 1 leads to an increase in the resistance, an increase in the voltage drop, a degradation in the mechanical properties and a decrease in the service life of the connecting joint.

In order to verify the influence of a ratio of the overlapping area of the functional part 2 and the connecting part 1, to the connection surface area of the connecting part 1 connected to the functional part 2, on the voltage drop (mV) and a drawing force (N), the inventor uses 120 sets of the functional parts 2 and the connecting parts 1 with the same material and structure, which are divided into 12 groups each having 10 sets. Using the same welding machine and tooling, different welding areas are processed on the same connection surface area of the functional part 2 connected to connecting part 1, so as to test the influence of different ratio of the welding area to the overlapping area of the functional part 2 and the connecting part 1 on the electrical and mechanical properties.

As can be seen from the data in Table 6 below, as the ratio of the welding area to the overlapping area of the functional part 2 and the connecting part 1 increases, the voltage drop performance and the drawing force performance of the corresponding welded joint are improved. When the ratio is less than 5%, the electrical and mechanical properties of the joint are obviously degraded, so the welding area of the joint may be at least 5% of the overlapping area of the functional part 2 and the connecting part 1. Therefore, the inventor sets that the overlapping area of the functional part 2 and the connecting part 1 accounts for 5% to 100% of the connection surface area on the connecting part 1, which is connected to the functional part 2.

**Table 6: Influence of different welding areas on the voltage drop (mV) and the drawing force (N)**

| No. | Area ratio | Voltage drop (mV) | Drawing force (N) |
|---|---|---|---|
| 1 | 100% | 3.1 | 2148.3 |
| 2 | 90% | 3.1 | 2014.6 |
| 3 | 80% | 3.2 | 1978.5 |
| 4 | 70% | 3.2 | 1952.6 |
| 5 | 60% | 3.3 | 1916.7 |
| 6 | 50% | 3.4 | 1904.9 |
| 7 | 40% | 3.5 | 1894.2 |
| 8 | 30% | 3.6 | 1861.8 |
| 9 | 20% | 3.7 | 1849.2 |
| 10 | 10% | 3.7 | 1827.5 |
| 11 | 5% | 3.8 | 1817.4 |
| 12 | <5% | 4.2 | 1626.6 |

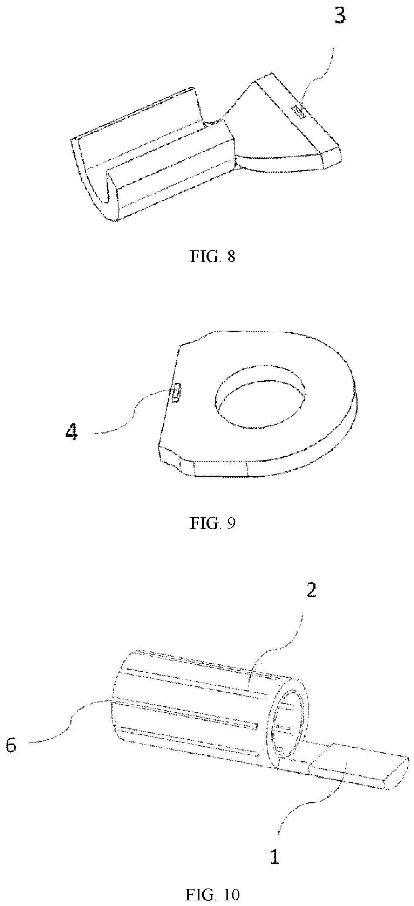

As illustrated in FIGS. 8 and 9, one of the connecting part 1 and the functional part 2 is provided with a recess 3, and the other is provided with a protrusion 4 matched with the recess 3 for mounting.

Specifically, the connecting part 1 is provided with the recess 3, and the functional part 2 is provided with the protrusion 4, or the connecting part 1 is provided with the protrusion 4, and the connecting part 2 is provided with the recess 3. The connecting part 1 and the functional part 2 are connected by snap-fit connection, so as to increase the contact area and save the materials, while ensuring the stability of the connection between the connecting part 1 and the functional part 2 and improving the connection strength.

A snap-fit structure is formed by the mutual engagement of the recess 4 and the protrusion 5 between the connecting part 1 and the functional part 2. On one hand, this structure increases the contact area between the connecting part 1 and the functional part 2, reduces the resistance, and improves the conduction effect. On the other hand, the snap-fit structure also increases the bonding force between the connecting part 1 and the functional part 2, so that the strength of the copper-aluminum terminal is higher, thereby improving the electrical and mechanical properties of the copper-aluminum terminal.

The recess 3 and the protrusion 4 are connected by means of welding or conductive adhesive bonding.

Specifically, by connecting the recess 3 and the protrusion 4 by means of welding or conductive adhesive bonding, the stability of the connection can be further improved and the connection strength can be increased.

As illustrated in FIGS. 1 to 7, the functional part 2 is shaped as a flat plate, and the flat plate is provided with a through hole 5 or a threaded hole.

By being provided with the through hole 5, the functional part 2 can be connected to the electric device by means of an interference fit, and the functional part 2 is screwed with the electric device through the threaded hole.

As illustrated in FIG. 10, the cross-section of the functional part 2 is shaped as a cylinder, the copper layer 21 is at least located inside the cylinder, and the cylinder is provided with at least one slot 6 in a longitudinal direction.

Since the functional part 2 is a cylindrical structure, the corresponding electric device may be shaped as a columnar to be plugged with the functional part 2, so as to realize electrical connection. After the functional part 2 is provided with at least one slot 6 in the longitudinal direction, the functional part 2 is expandable and contractable. When being plugged with the electric device, the functional part 2 is adaptive to the processing error of the electric device, and increases the binding force between the functional part 2 and the electric device, so as to ensure more contact area, and achieve better electrical and mechanical properties, thereby not only achieving the effective contact and connection, but also effectively reducing the hidden dangers of electric shock casualties and device damages caused by the poor structure of the connector.

The connecting part 1 is a flat plate structure or a cylindrical structure or a U-shaped open structure or a V-shaped open structure.

As illustrated in FIG. 1, the connecting part 1 is a flat plate structure. As illustrated in FIG. 5, the cross-section of the connecting part 1 is U-shaped.

The connecting part 1 is connected to the conductive portion of the aluminum cable by means of crimping, welding or bonding.

In order to adapt to the connection with the aluminum cable, the connecting part 1 may be connected to the aluminum cable in different connection modes according to actual needs, and it is also possible to optimize the technological structure of the electric product, shorten the processing time, and reduce the production and operation cost.

As illustrated in FIG. 1, when being a flat plate structure, the connecting part 1 is usually connected to the aluminum cable by means of welding or conductive adhesive bonding. Due to the small volume of the connection zone between the connecting part 1 and the aluminum cable, it is suitable for the situation of a small mounting space.

Alternatively, as illustrated in FIG. 5, the cross-sectional shape of the connecting part 1 is a U-shaped or V-shaped open structure, and the aluminum cable is generally connected by means of curl crimping, that is, both sides of the U-shaped or V-shaped connecting part 1 are curl, flipped, butted and crimped into a conductive core of the aluminum cable. Since the connecting part 1 is tightly crimped with the aluminum cable, there is a large contact area between the connecting part 1 and the aluminum cable, thereby achieving a good electrical conductivity and high mechanical properties.

Alternatively, as illustrated in FIG. 10, the connecting part 1 is a cylindrical structure, wherein the aluminum cable is inserted into the cylindrical connecting part 1, and then the aluminum cable and the connecting part 1 are connected together by means of crimping, welding or conductive adhesive coating, the connection is stable, the contact area is large, the electrical conductivity and mechanical properties of the electrical connector are good, and the structure is a closed structure. As a result, the connecting part 1 may not be cracked or broken due to the harsh mounting environment, thereby greatly reducing the possibility of loosening between the connecting part 1 and the aluminum cable, and improving the reliability and the service life of the connection.

In an embodiment, a copper-aluminum transition layer is disposed between the copper layer 21 and the aluminum layer 22.

The copper-aluminum transition layer is disposed on a connection surface of the copper layer 21 and the aluminum layer 22. Under the effect of heat and pressure, the copper atoms and the aluminum atoms penetrate or combine each other to form a copper-aluminum transition layer, thereby not only avoiding the galvanic corrosion between copper and aluminum, but also improving the electrical and mechanical properties of the copper-aluminum connection, so that the mechanical and electrical properties of the copper-aluminum composite terminal are significantly improved.

In the present disclosure, the transition layer in which metal atoms penetrate or combine each other means that energy is generated by the friction between a connecting piece and a copper terminal or by conducting current or an electric arc, then the copper layer 21 and the aluminum layer 22 are pressed against each other by a welding device, and copper atoms and aluminum atoms mutually penetrate to be dissolved into each other's crystal lattices at a welding interface under the effect of the energy, thereby producing a copper-aluminum solid solution. In addition, a small amount of copper atoms and aluminum atoms may be combined through metallic bonds to produce a copper-aluminum compound.

It should be noted that the copper-aluminum transition layer at least includes elemental copper, elemental aluminum, a copper-aluminum solid solution and a copper-aluminum compound. The copper-aluminum compound includes materials selected from the group consisting of Cu₂Al, Cu₃Al₂, CuAl and CuAl₂.

In an embodiment, the copper-aluminum transition layer includes the copper-aluminum solid solution not less than 8.5wt%.

Taking the functional part 2 as an example, i.e., the copper-aluminum transition layer in the functional part 2 includes the copper-aluminum solid solution less than 8.5wt%. When the copper-aluminum transition layer includes the copper-aluminum solid solution less than 8.5wt%, other components in the transition layer are more than 91.5wt%. When elemental copper and elemental aluminum account for large proportions in the copper-aluminum transition layer, it means that the welding of copper and aluminum is insufficient, and the elemental copper and the elemental aluminum are not fused to form the copper-aluminum solid solution. When the copper-aluminum compound accounts for a large proportion in the copper-aluminum transition layer, it means that the copper-aluminum compound has a very poor electrical conductivity and is brittle, and the mechanical and electrical properties of the copper-aluminum composite terminal may be degraded. Therefore, the copper-aluminum transition layer of the present disclosure includes the copper-aluminum solid solution of at least 8.5wt%.

In order to verify the influence of different proportions of copper-aluminum solid solutions in the copper-aluminum transition layer of the functional part 2 on the drawing force and the voltage drop of the copper-aluminum composite terminals, the drawing forces, the voltage drops and the welding strengths of the copper-aluminum composite terminals with different proportions of copper-aluminum solid solutions in the copper-aluminum transition layers are investigated, and the results are shown in Table 7.

**Table 7: Influence of the proportion of the copper-aluminum solid solution in the copper-aluminum transition layer on the drawing force and the voltage drop of the copper-aluminum composite terminal**

| No | Proportion of the copper-aluminum solid solution in the copper-aluminum transition layer (wt%) | | | | | | | | | | | | | |
|---|---|---|---|---|---|---|---|---|---|---|---|---|---|---|
| | 5.5 | 8.5 | 10.5 | 15.5 | 20.5 | 25.5 | 35.5 | 45.5 | 55.5 | 65.5 | 75.5 | 85.5 | 90.5 | 95.5 |
| | Drawing force of the copper-aluminum composite terminal (N) | | | | | | | | | | | | | |
| | 1525 | 2083 | 2259 | 2587 | 2885 | 3073 | 3216 | 3568 | 3733 | 3926 | 4163 | 4426 | 4568 | 4616 |
| | Voltage drop of the copper-aluminum composite terminal | | | | | | | | | | | | | |
| | 0.67 | 0.49 | 0.45 | 0.41 | 0.39 | 0.35 | 0.32 | 0.28 | 026 | 0.23 | 0.19 | 0.17 | 0.15 | 0.14 |

As can be seen from the above table, when the copper-aluminum solid solution included in the copper-aluminum transition layer of the functional part 2 is less than 8.5wt%, the drawing force of the copper-aluminum composite terminal is obviously reduced, and the voltage drop of the copper-aluminum composite terminal is obviously increased, which cannot meet the requirements of the mechanical and electrical properties of the copper-aluminum composite terminal. As the proportion of the copper-aluminum solid solution included in the copper-aluminum transition layer is gradually increased, the mechanical properties and electrical properties of the copper-aluminum composite terminal are gradually improved. Therefore, the inventor sets that the transition layer includes the copper-aluminum solid solution not less than 8.5wt%.

In an embodiment, the copper-aluminum transition layer includes the copper-aluminum compound not more than 45.5 wt %.

Taking the functional part as an example, the copper-aluminum transition layer includes the copper-aluminum compound not more than 45.5 wt %. The total weight proportion of the copper-aluminum compound is an important factor that influences the connectivity and the electrical conductivity of the copper layer 21 and the aluminum layer 22. Due to the large brittleness and high resistivity of the copper-aluminum compound, it is found in the researches of the present disclosure that a stress concentration is easy to occur around the copper-aluminum compound, which leads to cracks, thereby degrading the mechanical strength and the electrical properties of the copper-aluminum composite terminal. It is found in a large number of tests that as the total weight proportion of the copper-aluminum compound in the copper-aluminum transition layer increases, the internal stress is more concentrated. When the total weight proportion of the copper-aluminum compound in a copper-aluminum mixture is lower than a critical value, the mechanical strength and the electrical property of the copper-aluminum composite terminal meet the performance requirements. But when the total weight proportion of the copper-aluminum compound in copper-aluminum mixture is higher than the critical value, the performance degrades sharply, and the mechanical strength and the electrical property of the copper-aluminum composite terminal no longer meet the requirements. In the present disclosure, the total weight proportion of the copper-aluminum compound in the copper-aluminum transition layer should be controlled not to exceed 45.5%.

**Table 8: Influence of the total weight proportion of the copper-aluminum compound in the copper-aluminum transition layer on the peeling force and the voltage drop of the copper-aluminum composite terminal**

| Total weight proportions of different copper-aluminum compounds in the copper-aluminum transition layer (%) | | | | | | | | | | | | | | | | |
|---|---|---|---|---|---|---|---|---|---|---|---|---|---|---|---|---|
| 1 | 5 | 10 | 15.5 | 20.5 | 30.5 | 33.5 | 35.5 | 40.5 | 45.5 | 50.5 | 55.5 | 60.5 | 65.5 | 70.5 | 75.5 | 80.5 |

| Peeling force of the aluminum layer from the copper layer (N) | | | | | | | | | | | | | | | | |
|---|---|---|---|---|---|---|---|---|---|---|---|---|---|---|---|---|
| 548 | 518 | 496 | 453 | 418 | 385 | 351 | 307 | 285 | 210 | 183 | 164 | 148 | 132 | 116 | 101 | 95 |

| Voltage drop of the copper-aluminum composite terminal (N) | | | | | | | | | | | | | | | | |
|---|---|---|---|---|---|---|---|---|---|---|---|---|---|---|---|---|
| 0.10 | 0.17 | 0.20 | 0.27 | 0.30 | 0.36 | 0.39 | 0.41 | 0.45 | 0.47 | 0.53 | 0.59 | 0.63 | 0.70 | 0.75 | 0.82 | 0.90 |

As can be seen from the above table, when the total weight proportion of the copper-aluminum compound in the copper-aluminum transition layer of the functional part gradually increases from 1%, due to the large brittleness and the high resistivity of the copper-aluminum compound, the peeling force of the aluminum layer 22 from the copper layer 21 gradually decreases and the voltage drop of the copper-aluminum composite terminal gradually increases. It is found in a large number of tests that when the total weight proportion of the copper-aluminum compound in the copper-aluminum transition layer is 45.5%, the initial mechanical and electrical properties of the copper-aluminum composite terminal can meet the requirements. When the total weight proportion of the copper-aluminum compound in the aluminum mixture layer increases, the mechanical and electrical properties of the copper-aluminum composite terminal cannot meet the standard values, and may continue to degrade. Therefore, the inventor sets the total weight proportion of the copper-aluminum compound in the copper-aluminum transition layer to not exceed 45.5%.

Although some particular embodiments of the present disclosure have been described in detail by examples, it should be understood by those skilled in the art that the above examples are only for illustration and are not intended to limit the scope of the present disclosure. It should be understood by those skilled in the art that the above embodiments can be modified without departing from the scope of the present disclosure. The scope of the present disclosure is defined by the appended claims.

## Claims

1. A copper-aluminum composite terminal, which is configured to electrically connect an aluminum cable and an electric device to facilitate the flow of current, comprising: a connecting part (1) and a functional part (2) which are connected to each other, wherein the functional part (2) is made of an aluminum-clad copper composite material which comprises an inner copper layer (21) and an outer aluminum layer (22) encapsulating the inner copper layer (21); the connecting part (1) is connectable
to a conductive portion of the aluminum cable, and at least part of the copper layer (21) of the functional part (2) is connectable to the electric device **characterized in that**
the connecting part (1) and the functional part (2) are separate structural components, the connecting part (1) is made of aluminum, and the aluminum layer (22) of the functional part (2) is connected to the connecting part (1);
at least part of the connecting part (1) is superposed and welded with at least part of the functional part (2);
wherein the welded area between the functional part (2) and the connecting part (1) accounts for 5% to 100% of the overlapping area between the connecting part (1) and the functional part (2).

2. The copper-aluminum composite terminal according to claim 1, wherein at least part of a surface of the functional part (2) is provided with a plating layer having a thickness ranging from 0.05 µm to 1000 µm.

3. The copper-aluminum composite terminal according to claim 2, wherein the material of the plating layer comprises one or more materials selected from the group consisting of zinc, nickel, copper, tin, gold, silver, cadmium, manganese, zirconium, cobalt, titanium, chromium, tin-lead alloy, silver-antimony alloy, palladium, palladium-nickel alloy, graphite silver, graphene silver, and silver-gold-zirconium alloy; or
wherein the plating layer comprises a bottom layer with a thickness of 0.01 µm to 100 µm, and a surface layer with a thickness of 0.03 µm to 900 µm.

4. The copper-aluminum composite terminal according to claim 1, wherein a thickness of the aluminum layer (22) accounts for 0.1% to 100% of a thickness of the copper layer (21) in the aluminum-clad copper composite material;
preferably wherein the connecting part (1) and the functional part (2) are integrally formed from the aluminum-clad copper composite material.

5. The copper-aluminum composite terminal according to claim 1, wherein the functional part (2) is shaped as a flat plate, and the flat plate is provided with a through hole (5) or a threaded hole.

6. The copper-aluminum composite terminal according to claim 1, wherein the functional part (2) is shaped as a cylinder, the copper layer (21) is at least located inside the cylinder, and the cylinder is provided with at least one slot (6) in a longitudinal direction.

7. The copper-aluminum composite terminal according to claim 1, wherein the connecting part (1) is a flat plate structure or a cylindrical structure or a U-shaped open structure or a V-shaped open structure.

8. The copper-aluminum composite terminal according to claim 1, wherein the connecting part (1) and the conductive portion of the aluminum cable are connected by means of crimping or welding or bonding or riveting.

9. The copper-aluminum composite terminal according to claim 1, wherein a copper-aluminum transition layer is disposed between the copper layer (21) and the aluminum layer (22).

10. The copper-aluminum composite terminal according to claim 10, wherein the copper-aluminum transition layer comprises at least 8.5 wt% of a copper-aluminum solid solution.

11. The copper-aluminum composite terminal according to claim 10, wherein the copper-aluminum transition layer comprises a copper-aluminum compound not more than 45.5 wt %.

## Patentansprüche

1. Kupfer-Aluminium-Verbundklemme, die dazu ausgelegt ist, ein Aluminiumkabel und ein elektrisches Gerät elektrisch zu verbinden, um den Stromfluss zu erleichtern, aufweisend:
ein Verbindungsteil (1) und ein Funktionsteil (2), die miteinander verbunden sind, wobei das Funktionsteil (2) aus einem aluminiumbeschichteten Kupferverbundmaterial besteht, das eine innere Kupferschicht (21) und eine äußere Aluminiumschicht (22) aufweist, die die innere Kupferschicht (21) umhüllt; das Verbindungsteil (1) mit einem leitfähigen Abschnitt des Aluminiumkabels verbindbar ist und zumindest ein Teil der Kupferschicht (21) des Funktionsteils (2) mit dem elektrischen Gerät verbindbar ist;
**dadurch gekennzeichnet, dass**
der Verbindungsteil (1) und der Funktionsteil (2) separate Bauteile sind, der Verbindungsteil (1) aus Aluminium besteht und die Aluminiumschicht (22) des Funktionsteils (2) mit dem Verbindungsteil (1) verbunden ist;
mindestens ein Teil des Verbindungsteils (1) mit mindestens einem Teil des Funktionsteils (2) überlagert und verschweißt ist;
wobei der verschweißte Bereich zwischen dem Funktionsteil (2) und dem Verbindungsteil (1) 5 % bis 100 % der Überlappungsfläche zwischen dem Verbindungsteil (1) und dem Funktionsteil (2) ausmacht.

2. Kupfer-Aluminium-Verbundklemme gemäß Anspruch 1, bei der zumindest ein Teil einer Oberfläche des Funktionsteils (2) mit einer Beschichtungsschicht versehen ist, deren Dicke im Bereich von 0,05 µm bis 1000 µm liegt.

3. Kupfer-Aluminium-Verbundklemme gemäß Anspruch 2, bei der das Material der Beschichtungsschicht ein oder mehrere Materialien aufweist, die aus der Gruppe ausgewählt sind, bestehend aus Zink, Nickel, Kupfer, Zinn, Gold, Silber, Cadmium, Mangan, Zirkonium, Kobalt, Titan, Chrom, einer Zinn-Blei-Legierung, einer Silber-Antimon-Legierung, Palladium, Palladium-Nickel-Legierung, Graphit-Silber, Graphen-Silber und einer Silber-Gold-Zirkonium-Legierung; oder
bei der die Beschichtungsschicht eine Unterschicht mit einer Dicke von 0,01 µm bis 100 µm und eine Oberflächenschicht mit einer Dicke von 0,03 µm bis 900 µm aufweist.

4. Kupfer-Aluminium-Verbundklemme gemäß Anspruch 1, bei der die Dicke der Aluminiumschicht (22) 0,1 % bis 100 % der Dicke der Kupferschicht (21) in dem aluminiumbeschichteten Kupferverbundmaterial ausmacht;
vorzugsweise wobei das Verbindungsteil (1) und das Funktionsteil (2) einstückig aus dem aluminiumbeschichteten Kupferverbundmaterial geformt sind.

5. Kupfer-Aluminium-Verbundklemme gemäß Anspruch 1, bei der der Funktionsteil (2) als flache Platte ausgebildet ist und die flache Platte mit einem Durchgangsloch (5) oder einem Gewindeloch versehen ist.

6. Kupfer-Aluminium-Verbundklemme gemäß Anspruch 1, bei der das Funktionsteil (2) als Zylinder ausgebildet ist, sich die Kupferschicht (21) zumindest im Inneren des Zylinders befindet und der Zylinder mit mindestens einem Schlitz (6) in Längsrichtung versehen ist.

7. Kupfer-Aluminium-Verbundklemme gemäß Anspruch 1, bei der das Verbindungsteil (1) eine flache Plattenkonstruktion oder eine zylindrische Konstruktion oder eine U-förmige offene Konstruktion oder eine V-förmige offene Konstruktion ist.

8. Kupfer-Aluminium-Verbundklemme gemäß Anspruch 1, bei der das Verbindungsteil (1) und der leitende Abschnitt des Aluminiumkabels durch Crimpen, Schweißen, Kleben oder Nieten verbunden sind.

9. Kupfer-Aluminium-Verbundklemme gemäß Anspruch 1, bei der zwischen der Kupferschicht (21) und der Aluminiumschicht (22) eine Kupfer-Aluminium-Übergangsschicht angeordnet ist.

10. Kupfer-Aluminium-Verbundklemme nach Anspruch 10, bei der die Kupfer-Aluminium-Übergangsschicht mindestens 8,5 Gewichts-% einer Kupfer-Aluminium-Mischkristalllösung enthält.

11. Kupfer-Aluminium-Verbundklemme gemäß Anspruch 10, bei der die Kupfer-Aluminium-Übergangsschicht eine Kupfer-Aluminium-Verbindung von nicht mehr als 45,5 Gewichts-% aufweist.

## Revendications

1. Borne composite cuivre-aluminium conçue pour relier électriquement un câble en aluminium et un appareil électrique afin de faciliter la circulation du courant, comprenant:
un élément de connexion (1) et un élément fonctionnel (2) qui sont reliées l'une à l'autre, l'élément fonctionnel (2) étant constituée d'un matériau composite cuivre revêtu d'aluminium, qui comporte une couche interne de cuivre (21) et une couche externe d'aluminium (22) qui enveloppe la couche interne de cuivre (21); l'élément de connexion (1) pouvant être relié à une partie conductrice du câble en aluminium et au moins une partie de la couche de cuivre (21) de l'élément fonctionnel (2) pouvant être reliée à l'appareil électrique;
**caractérisé en ce que**
l'élément de connexion (1) et l'élément fonctionnel (2) sont des composants distincts, l'élément de connexion (1) est en aluminium et la couche d'aluminium (22) d'élément fonctionnel (2) est reliée à l'élément de connexion (1);
au moins une partie d'élément de connexion (1) est superposée à au moins une partie d'élément fonctionnel (2) et soudée à celle-ci;
la zone soudée entre l'élément fonctionnel (2) et l'élément de connexion (1) représentant entre 5 % et 100 % de la surface de chevauchement entre l'élément de connexion (1) et l'élément fonctionnel (2).

2. Borne composite cuivre-aluminium selon la revendication 1, dans laquelle au moins une partie d'une surface d'élément fonctionnel (2) est pourvue d'une couche de revêtement dont l'épaisseur est comprise entre 0,05 µm et 1 000 µm.

3. Borne composite cuivre-aluminium selon la revendication 2, dans laquelle le matériau de la couche de revêtement comprend un ou plusieurs matériaux choisis parmi le groupe constitué du zinc, du nickel, du cuivre, de l'étain, de l'or, de l'argent, du cadmium, manganèse, zirconium, cobalt, titane, chrome, un alliage étain-plomb, un alliage argent-antimoine, le palladium, un alliage palladium-nickel, graphite-argent, graphène-argent et un alliage argent-or-zirconium ; ou
dans laquelle la couche de revêtement comprend une sous-couche d'une épaisseur comprise entre 0,01 µm et 100 µm et une couche superficielle d'une épaisseur comprise entre 0,03 µm et 900 µm.

4. Borne composite cuivre-aluminium selon la revendication 1, dans laquelle l'épaisseur de la couche d'aluminium (22) représente entre 0,1 % et 100 % de l'épaisseur de la couche de cuivre (21) dans le matériau composite cuivre revêtu d'aluminium;
de préférence, l'élément de connexion (1) et l'élément fonctionnel (2) étant moulées d'un seul tenant à partir du matériau composite cuivre revêtu d'aluminium.

5. Borne composite cuivre-aluminium selon la revendication 1, dans laquelle l'élément fonctionnel (2) est réalisé sous la forme d'une plaque plate et ladite plaque plate est pourvue d'un trou traversant (5) ou d'un trou fileté.

6. Borne composite cuivre-aluminium selon la revendication 1, dans laquelle l'élément fonctionnel (2) est réalisé sous la forme d'un cylindre, la couche de cuivre (21) se trouve au moins à l'intérieur du cylindre et le cylindre est muni d'au moins une fente (6) dans le sens longitudinal.

7. Borne composite cuivre-aluminium selon la revendication 1, dans laquelle l'élément de connexion (1) présente une structure en plaque plate, une structure cylindrique, une structure ouverte en forme de U ou une structure ouverte en forme de V.

8. Borne composite cuivre-aluminium selon la revendication 1, dans laquelle l'élément de connexion (1) et la partie conductrice du câble en aluminium sont assemblées par sertissage, soudage, collage ou rivetage.

9. Borne composite cuivre-aluminium selon la revendication 1, dans laquelle une couche de transition cuivre-aluminium est disposée entre la couche de cuivre (21) et la couche d'aluminium (22).

10. Borne composite cuivre-aluminium selon la revendication 10, dans laquelle la couche de transition cuivre-aluminium contient au moins 8,5 % en poids d'une solution de cristaux mixtes cuivre-aluminium.

11. Borne composite cuivre-aluminium selon la revendication 10, dans laquelle la couche de transition cuivre-aluminium contient au plus 45,5 % en poids d'un composé cuivre-aluminium.
